(19) Europäisches Patentamt
European Patent Office
Office européen des brevets

(11) **EP 3 334 906 B1**

(12) **EUROPEAN PATENT SPECIFICATION**

(45) Date of publication and mention
of the grant of the patent:
**01.12.2021   Bulletin 2021/48**

(21) Application number: **15754385.1**

(22) Date of filing: **14.08.2015**

(51) Int Cl.:
**F01D 17/14** *(2006.01)*     **F15B 11/048** *(2006.01)*

(86) International application number:
**PCT/US2015/045289**

(87) International publication number:
**WO 2017/030533 (23.02.2017 Gazette 2017/08)**

(54) **METHOD FOR CONTROLLING A VALVE AND CORRESPONDING VALVE APPARATUS**

REGELUNGSVERFAHREN FÜR EIN VENTIL UND ZUGEHÖRIGE VENTILVORRICHTUNG

MÉTHODE DE CONTRÔLE D'UNE SOUPAPE ET DISPOSITIF DE SOUPAPE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.06.2018   Bulletin 2018/25**

(73) Proprietor: **Woodward, Inc.
Fort Collins, Colorado 80524 (US)**

(72) Inventors:
• **KAMPHAUS, Richard L.
Fort Collins, Colorado 80528 (US)**
• **MOLENAAR, Gregory A.
Fort Collins, Colorado 80526 (US)**
• **BRITT, Tena K.
Loveland, Colorado 80537 (US)**

(74) Representative: **Fish & Richardson P.C.
Highlight Business Towers
Mies-van-der-Rohe-Straße 8
80807 München (DE)**

(56) References cited:
**WO-A1-2010/086215     WO-A2-99/10629
US-A1- 2005 132 986**

• **None**

## Description

### TECHNICAL FIELD

This specification relates to a valve apparatus for a turbine system and a method for controlling a valve for a turbine system.

### BACKGROUND

Cushioning of some sort normally is required to decelerate a valve before it strikes the valve seat. Cushioning of the valve as it approaches the valve seat lowers the stresses on valve components and reduces vibration transmitted to the machine structure. Valve seat impact is commonly dealt with in three ways: by simple impact cushioning, fluid cushioning, or by installing shock absorbers. Fluid cushioning generally involves the use of spring-loaded check valves to shunt pressure spikes around the valve. Shock absorbers generally introduce a degree of mechanical compliance between the valve and the valve seat. Fluid cushioning and shock absorbers add mechanical complexity to the valve and can be prone to leakage, especially when the pressures of the regulated fluids are similar to those which trigger the cushioning mechanisms.

Hydraulic cushions, which restrict hydraulic flow to the cylinder for the last few percent of travel (piston partially covers the hydraulic inlet), are not adjustable. As a result, a hydraulic cushion does not protect the valves if they close before the cylinder end of travel is reached. This could happen due to temperature expansion or the basic setup of the cylinder and valve. Such cushions can provide longer service lives than valves without impact cushioning used under similar circumstances, but are still generally considered to be consumable parts since the repeated high-speed impacts between the valve and cushions still causes cumulative damage and which can lead to mechanical failure, downtime for repairs, or a safety hazard. WO 99/10629 describes a hydraulic actuator for operating an engine valve, which includes a means for controlling the seating velocity of the valve. The design allows for free, unrestricted movement of the actuator piston during opening of the engine valve, and an unrestricted return of the piston and valve until the valve is within a predetermined distance of the valve seat. Once within this pre-determined range, the return velocity of the actuator piston and engine valve are limited by the rate at which a fluid may escape through a restriction. The restriction is calibrated to provide the desired maximum valve seating velocity. The disclosure also provides for automatic lash adjustment. US 2005/0132986 A1 describes an engine valve actuation system, which includes an engine valve moveable between first and second positions, a valve actuation assembly connected to move the engine valve between the first and second positions, a fluid actuator configured to selectively modify a timing of the engine valve in moving from the second to the first position, a source of fluid, and a pair of passages in the cylinder that allow fluid to flow from the chamber to the fluid source. The fluid actuator includes a cylinder and a piston at least partly defining a chamber. The piston is slidably movable in the cylinder between a first position and a second position, and blocks at least a portion of one of the passages at an intermediate position between the second position and the first position to reduce fluid flow from the chamber when the piston moves from the second position toward the first position.

### SUMMARY

The invention is defined in the claims. In general, this document is directed to valves with variable closing rate limits.

In a first aspect of the invention, a method for controlling a valve for a turbine system is provided, as set forth in claim 1.

Various embodiments can include some, all, or none of the following features. The closed valve position can be defined by the valve member being in contact with a valve seat. The first valve closure rate is equal to or greater than a threshold closure rate able to cause damage to at least one of the valve member or the valve seat when the valve member contacts the valve seat at the threshold closure rate. The second valve closure rate can be less than a threshold closure rate able to cause damage to at least one of the valve member or the valve seat. The valve member can be a plurality of valve members, and the actuator can be configured to move the plurality of valve members between an open valve position for each valve member and a closed valve position for each valve member.

In a second aspect of the invention, a valve apparatus for a turbine system is provided, as set forth in claim 5.

Various embodiments can include some, all, or none of the following features. The closed valve position can be defined by the valve member being in contact with a valve seat. The first valve closure rate can be equal to or greater than a threshold closure rate able to cause damage to at least one of the valve member or the valve seat when the valve member contacts the valve seat at the threshold closure rate. The second valve closure rate can be less than a threshold closure rate able to cause damage to at least one of the valve member or the valve seat. The valve member can be a plurality of valve members, and the actuator can be configured to move the plurality of valve members between an open valve position for each valve member and a closed valve position for each valve member.

The systems and techniques described here may provide one or more of the following advantages. First, a system can provide the ability to close a steam valve during a shutdown with two or more different rates of closure. Second, the system can limit turbine overspeed and quickly to limit the amount of steam entering the turbine and by closing the valve for most of the valve stroke at a rapid rate. Third, the system can reduce damage to the valve seat by close the valve at a slower rate for the remainder of the valve stroke.

The details of one or more implementations are set forth in the accompanying drawings and the description below. Other features and advantages will be apparent from the description and drawings, and from the claims.

## DESCRIPTION OF DRAWINGS

FIG. 1 is a schematic diagram that shows an example of a turbine system.
FIGs. 2A and 2B are diagrams that shows a top and cross sectional side view of an example valve with variable stroke rate.
FIG. 3 is a chart of example position behaviors of a valve with variable stroke rate.
FIG. 4 is a block diagram of an example control system for a valve with variable stroke.
FIG. 5 is flow chart that shows an example of a process for operating a valve with variable stroke rate.

## DETAILED DESCRIPTION

This document describes systems and techniques for controlling fluid flow using valves with variable stroke rates. Steam turbine valves can sustain small but cumulatively significant damage when the valve closes quickly, such as during a shutdown. This makes the ability to limit the velocity of the valve in the stroke region near the valve seat highly desirable. The solution to this problem is complicated by the fact that the linkage to the steam turbine valves can grow and shrink appreciably with temperature, so that the actual position of the valve seat is unknown to the control. As used herein, the term "valve seat" means a surface a valve contacts to close the flow of fluid through a valve when the valve is closed. For example, on a poppet-style valve, the sealing surfaces must be pressed firmly against each other at close, so they also act as hard stops. If the sealing surfaces of the valve are damaged by impact, they may no longer seal well. Another complicating variable is the fact that the actuator may not be able to keep up with the demand. For example, simply slowing the ramp rate limit of the demand will have no effect if the rate limited demand is significantly ahead of the actuator. Furthermore, real world variations, such as supply pressure and load, make it difficult to ensure that the actuator will keep up with demand without adversely affecting the shutdown time of the actuator.

To solve the problem of high closing velocity accompanied by thermal growth, rather than using impact cushioning, fluid cushioning, or shock absorbers to reduce valve seat impact, the valves in this document are closed in two or more stages. A user configurable "slow zone" is defined as sub-portion of the full valve stroke in which the velocity of the valve closure is limited to a user configurable rate. The valve body is moved away from an open position and toward the closed position until a predetermined position near the valve's closed position is reached (e.g., the "slow zone"). Then the valve body is moved from the predetermined position at a slower rate until the valve body becomes substantially seated and the valve is substantially closed. By actuating the valve in such a manner, valve seat impact can be reduced compared to impacts at higher closure rates (e.g., "slamming" the valve shut), while fluid flow may be stopped more quickly compared to valves using a slow closure rate throughout the stroke range of the valve body.

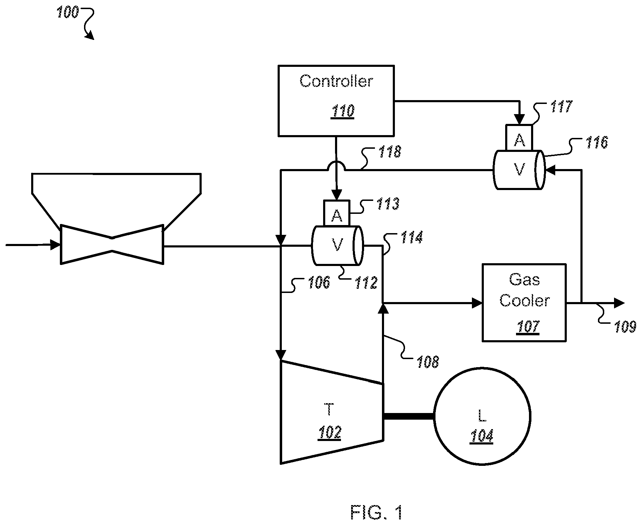

FIG. 1 is a schematic diagram that shows an example of a turbine system 100. The example turbine system 100 includes a turbine 102 which drives a load 104 such as an electrical generator, a compressor, or any other appropriate rotary mechanical load. The turbine 102 receives steam or another appropriate fluid flow at an inlet 106 (e.g., an inlet port) and discharges the fluid at a discharge 108 (e.g., an outlet port). The fluid is passed through a gas cooler 107 (e.g., a heat exchanger) and out to a reservoir (not shown) through an outlet 109. A recycle conduit 114 fluidly connects the inlet 106 to the discharge 108, and a recycle conduit 118 fluidly connects the outlet 109 to the inlet 106.

A controller 110 is configured to control an actuator 113 of a valve 112, and an actuator 117 of a valve 116. In some embodiments, the controller 110 can be a general purpose computer configured with instructions that, when executed, cause the controller 110 to control the actuator 113 and/or the actuator 117. In some embodiments, the controller 110 can be a dedicated or purpose-built controller (e.g., a programmable logic controller, PLC). In the illustrated example, the valves 112 and 116 are shown as recycle valves, but in some embodiments the controller 110 may be configured to control any appropriate configuration of valve.

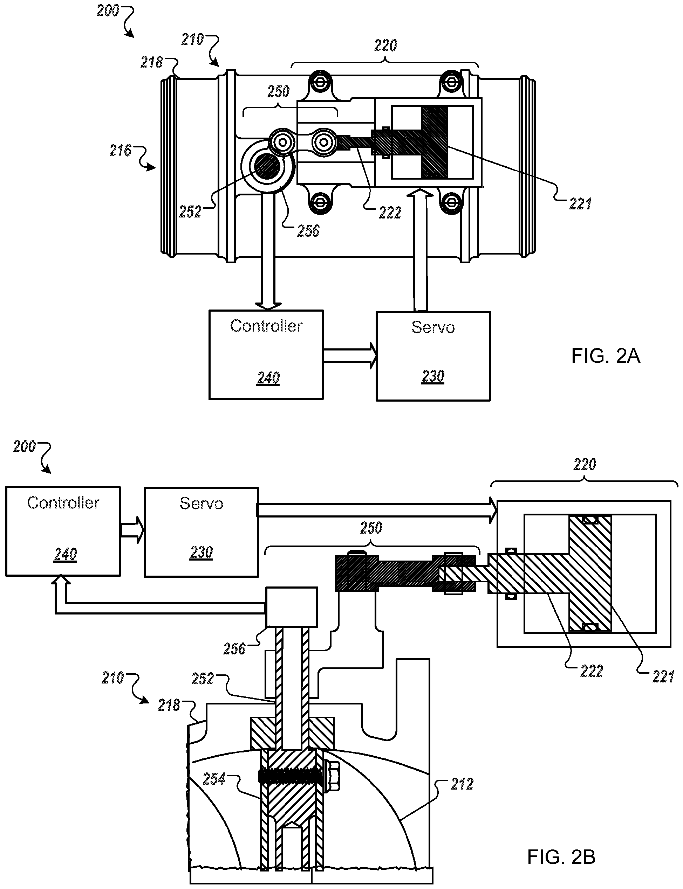

FIGs. 2A and 2B are diagrams that shows a top and cross sectional side view of another example of a valve assembly 200 with variable stroke rate. The valve assembly 200 includes a valve 210 with a positionable member 212 that can be moved to controllably obstruct a fluid path passing through a central bore 216 of a flow body 218. In some embodiments, the valve 210 can be the valve 112 or the valve 116 of the example turbine system 100. Although the valve 210 is illustrated and described as a rotary valve in this example, in some embodiments the valve 210 can be a linear valve (e.g., poppet valve), grid valve, or any other appropriate form of valve.

The positionable member 212 is configured to be moved by a controllable actuator assembly 220 linked to the positionable member 212 by a linkage assembly 250. In some embodiments, the controllable actuator assembly 220 can be the actuator 113 or the actuator 117 of the example turbine system 100.

The actuator assembly 220 of the example valve assembly 200 is a linear fluid actuator (e.g., hydraulic or pneumatic piston) that includes a piston 221 configured to urge linear movement of a piston rod 222. In accordance with the invention, the actuator is an electric motor. Reciprocal movement of the piston 221 is transformed by the actuator assembly 220 into rotary motion of an output shaft 252. The output shaft 252 is coupled to a position sensor 256 configured to measure the rotational position and/or speed of the output shaft 252. In some embodiments, the valve 210 can be a linear valve (e.g., poppet valve), and the piston rod 222 may be configured to actuate linear movement of the linear valve, e.g., by a direct connection between the valve 210 and the piston rod 222 or by a lever or other linkage connecting the valve 210 and the piston rod 222 indirectly.

The actuator assembly 220 of the example of figure 2B is in fluid communication with a fluid servo assembly 230. The fluid servo assembly 230 is controlled by a controller 240 to provide actuation fluid to the actuator assembly 220 to urge movement of the piston 221 to various predetermined positions at controlled rates of speed. The controller 240 is configured to receive rotational position and/or speed signals from the position sensor 256 (e.g., to form a closed position feedback loop).

In some embodiments, the controller 240 can be the controller 110 of the example turbine system 100. In some embodiments, the controller 240 may control the actuator assembly 220 directly. In accordance with the invention, the actuator assembly 220 is an electric motor (e.g., stepper or servo) and the controller 240 may include motor control circuitry that can control the position and/or speed of the actuator assembly 220.

Referring primarily now to FIG. 2B, the output shaft 252 of the example valve assembly 200 transfers the rotary motion (e.g., torque) to the positionable member 212, the position sensor 256, and a moveable member 254. The moveable member 254 is coupled to the positionable member 212. In some embodiments, the moveable member 254 may be coupled to the positionable member 212 by brazing, welding, bolting, press fitting, or any other appropriate bond. In some embodiments, the moveable member 254 and the positionable member 212 may be formed from a unitary piece of material. Rotary movement of the moveable member 254 urges rotary movement of the positionable member 212 within flow body 218, which can control the flow of fluid through the flow path 214. In accordance with the invention, the position sensor 256 is configured to sense the position of the positionable member 212. In some embodiments, the position sensor 256 may be configured to sense the position of the piston 221.

The controller 240 is configured to close the valve 210 in two or more stages. For example, in an emergency situation, the valve 210 may need to be shut quickly. If the moveable member 254 was moved to closure at a single, rapid rate, the moveable member 254 may collide with a hard stop (e.g., valve seat) or other mechanical limit at that rapid rate. In some examples, the force of such collisions can cause immediate or cumulative damage to various components of the valve 210 (e.g., valve seat, the moveable member 254), the actuator assembly 220, and/or the linkage assembly 250. The valve assembly 200 is configured to actuate the moveable member 254 at a first, relatively high speed (e.g., about 10 inches (0.254 m) of travel in about 0.5 seconds or less for a linear valve) from an initial open position to a predetermined position near the fully closed position. Then the valve assembly 200 finishes closing the valve by reducing the speed at which the moveable member 254 encounters the mechanical hard stop at closure (e.g., about 10 inches (0.254 m) of travel in about 1.0 second or more for a linear valve). By reducing the force with which the moveable member 254 impacts the hard stop (by reducing the speed of moveable member 254), the valve assembly 20 can reduce the damage that can result from such impacts. In some implementations, the fast and/or slow closure rates can be configured by the user.

In some embodiments, the predetermined position can be determined in part by identifying a position where the moveable member 254 is not able to contact the hard stop (e.g., valve seat) under various operational conditions. For example, the dimensions and mechanical tolerances of the various components of the valve assembly 200 can change as the temperature of components of the valve assembly 200 change during operation. Such thermal changes can cause expansion and contraction of the components of the valve assembly 200, and can change the position where the moveable member 254 contacts the hard stop (e.g., the fully closed position). In another example, various components of the valve assembly 200 may wear over their lifetimes, causing the fully closed position to move over time (e.g., the valve seat may wear over time and require the moveable member to travel further in order to fully close the valve 210). In some examples, the fully closed position may vary by about 10% (e.g., 5%-20%) depending on operating and wear conditions of the valve assembly 200.

To reduce or prevent hard collisions between the moveable member 254 and the hard stop of the example valve assembly 200, the predetermined position is selected as a closure position that is known to be close to, but not in contact with, the hard stop under expected operational conditions. In operation, the valve 210 may be mostly closed relatively quickly by moving the moveable member 254 to the predetermined position at a fast closure rate, and then the valve 210 can be closed from the mostly closed configuration to a substantially fully closed position by moving the moveable member 254 at a slow closure rate until the hard stop is encountered (e.g., with a soft impact) and/or the flow through the valve 210 is substantially stopped. In some implementations, the predetermined position can be a user configurable setting.

In some embodiments, the example valve assembly 200 may include two or more valves 210, and each valve may have its own open position and closed position. For example, the controller 240 may be configured to control the movement of multiple valves between each valve's respective open position and closed position at fast and slow closure rates. In some embodiments, the multiple valves may be mechanically separate (e.g., independently actuated). For example, the controller 240 may be configured to control two valves independently (e.g., the valves may have different open positions, closed positions, fast closure rates, slow closure rates, and/or predetermined positions between open and closed). In some embodiments, the multiple valves may be mechanically linked (e.g., the controller 240 controls the fast and slow rates of two or more valves through a single mechanical linkage).

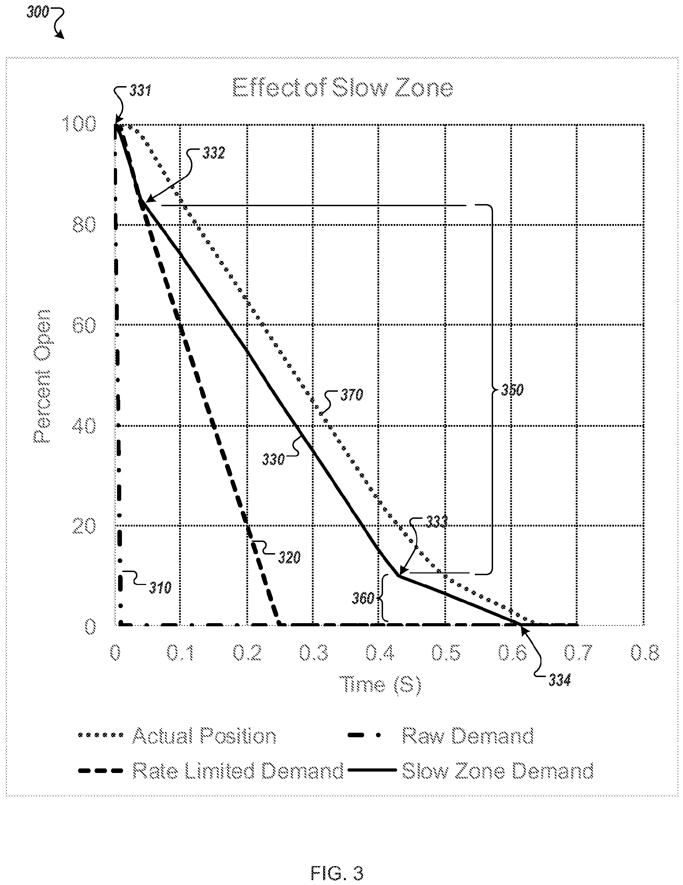

FIG. 3 is a chart 300 of example position behaviors of a valve with variable stroke rate. In some implementations, the chart 300 may represent behaviors of the example turbine system 100 or the example valve assembly 200. The chart 300 includes a line 310 which represents demand (e.g. the desired position of the valve). In the illustrated example, the valve is being directed to move from fully open (100%) to fully closed (0%) almost instantaneously.

A line 320 represents a rate limited demand. Since it is physically impossible for a valve to move between two positions instantaneously, an instantaneous change in demand can lead to wide positional errors (e.g., the difference between the demanded and actual position). In some examples, wide positional errors can cause a closed feedback loop controller to try to correct the error by rapidly actuating the valve. In the process, the controller may overreact and cause the valve to overshoot the demanded position and cause a forceful impact between the valve body and the hard stop at the fully closed position. Use of the rate limited demand 320 is one technique for reducing the amount of positional error and the resulting overshoot of the demanded position. However, the valve may still be unable to keep up with the rate limited demand 320 for various reasons, such as the rate limited demand 320 changing at a rate that is faster than the valve body can be actuated (e.g., high inertia of the valve body, insufficient torque provided by the actuator) and/or due to external variables (e.g., fluid loading the valve, or drop in the supply pressure to the actuator).

Line 330 represents a slow zone demand. One or more user configurable "slow zones" can be defined as region of the full valve stroke near the valve seat in which the velocity of the valve closure is limited to a user configurable rate. In the illustrated example, two "slow zones" are implemented; a slow zone 350 is defined between 85% open and about 10% open, and a second slow zone 360 is defined between about 10% open and about 0% open (e.g., fully closed). In some implementations, the upper range of the slow zone 350 may be selected as a position that is known to be tolerant of relatively large positional errors (e.g., where there is little concern regarding adverse effects of controller overshoot). For example, thermal expansion, or "drift", can cause the fully closed position to appear to move by up to 15%, with 5% being typical. In some implementations, the upper range of the slow zone 360 may be selected as a position that is at or near the actual, rather than the theoretical, fully closed position. Various factors, such as manufacturing tolerances for the valve, coefficients of thermal expansion for the valve, and/or wear of the valve may cause the physical location of the fully closed position to vary by moving to a location away from the expected or ideal fully closed position, such as at a position that is about 8% open under theoretically ideal conditions (e.g., no variance in tolerances).

In accordance with the invention, the variability is determined based on at least one of (1) a collection of manufacturing tolerances for the valve, (2) a collection of coefficients of thermal expansion for the valve, or (3) a collection of wear characteristics for the valve. For example, the location of the fully closed position may be determined to be increased up to +1% based on tolerances, increased up to +5% due to thermal expansion, and reduced by - 2% based on the estimated wear of internal components, resulting in an approximately 1%+5%-2% = +4% offset in the expected fully closed position. The determination of where to slow the closure of the valve may also incorporate a safety margin. For example, a 3% safety margin may be added to the previously identified 4% position, to increase the likelihood that the closure rate will be reduced to a more mechanically tolerable rate before an impact occurs.

Line 370 represents the actual valve position (e.g., as measured by the position sensor 256 of the example actuator assembly 200). From a point 331 to a point 332, the rate of the slow demand 330 is substantially the same as the rate of the rate limited demand 320. Between these points, the difference (e.g., positional error) between the demands 320, 330 and the actual valve position 370 grows. In some examples, the error may grow because the valve is not physically capable of changing position at a rate that keeps up with the demand.

At the point 332, the slow zone 350 is entered and the slow zone demand 330 diverges from the rate limited demand 320. The slow zone demand 330 exhibits a closure rate that is slower than both the actual demand 310 and the rate limited demand 320, and more closely matches the capability of the valve. As such, the error between the actual valve position 370 and the slow zone demand 330 remains substantially constant from the point 332 to a point 333.

At the point 333, the slow zone 360 is entered. The slow zone 360 represents a range of theoretical or ideal closure positions within which the actual closure position may occur under various operating conditions (e.g., thermal expansion of valve components). As shown at the point 333, the slow zone demand 330 slows to a rate that is less than the actual demand 310, the rate limited demand 320, and the slow zone demand 330 in the slow zone 350. As illustrated by the actual valve position 370, the valve continues to close at the slower rate until it reaches a substantially closed position (e.g., 0%).

In some embodiments, the valve may become substantially fully closed at a position other than 0%. For example, the fully closed position can be at the 0% position ideally and the demands 310, 320, 330 may all demand an end position of 0%, but in reality the valve may become fully closed anywhere from about 0%-10% of that full range. In some embodiments, the rate of the slow zone demand 330 in the slow zone 360 may be selected based on a speed that limits the force of impact when the valve body becomes substantially seated and the valve is substantially closed.

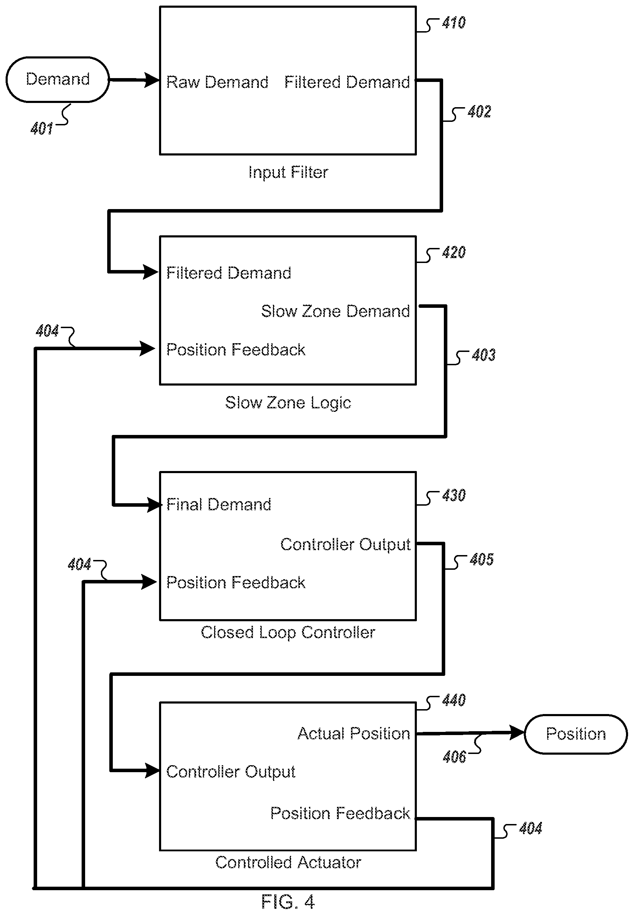

FIG. 4 is a block diagram of an example control system 400 for a valve with variable stroke. In some implementations, the control system 400 may be used by the controller 110 of the example turbine system 100, or by the controller 240 of the example valve assembly 200. In some implementations, the control system 400 may be used to create the behaviors illustrated by the example chart 300.

The control system 400 includes an optional demand filter 410. The demand filter 410 receives a raw demand 401 and provides a filtered demand 402. In some implementations, the demand filter 410 may be a low-pass or noise filter, to smooth out the raw demand 401 before further processes are performed.

The filtered demand 402 is received by a slow zone logic module 420. The slow zone logic module 420 follows a modified demand, SlowZoneDmd, such that outside of the slow zone:

$$\text{SlowZoneDmd} = \max (\text{RawDmd Feedback} - \text{Delta}, \text{SlowZoneEdge})$$

In the foregoing equation, RawDmd is the demand (e.g., the filtered demand 402, or the demand 401 if the demand filter 410 is not used) before it is modified by the slow zone logic module 420. Delta is the minimum position error that would result in a substantially unimpeded slew rate. SlowZoneRampRate is the desired ramp rate. SlowZoneEdge is the position switch point between unimpeded speed and the slow zone.

In accordance with the invention, the SlowZoneEdge is a position that is determined based on at least one of (1) a collection of manufacturing tolerances for the valve, (2) a collection of coefficients of thermal expansion for the valve, or (3) a collection of wear characteristics for the valve.

Inside the slow zone:

$$\text{SlowZoneDmd} = \max (\text{RawDmd}, \text{PreviousTimeStepSlowZoneDmd}$$

$$- \text{dSlowZone})$$

where:

$$\text{dSlowZone} = \text{SlowZoneRampRate} * \text{T\_TimeStep}$$

T_TimeStep = sample time of the controller.

PreviousTimeStepSlowZoneDmd is SlowZoneDmd from the previous controller time step. SlowZoneDmd is a demand after modification by the slow zone logic module 420, and is provided as a slow zone demand 403.

The slow zone demand 403 is received by a closed loop controller 430. The closed loop controller compares the slow zone demand 403 to a position feedback signal 404 to determine a controller output 405.

The controller output is received by a controlled actuator 440 (e.g., the example actuators 113 and/or 117, the example actuator assembly 220). The controlled actuator 440 provides a positional output 406, such as by moving a mechanical output toward a position represented by the controller output 405. The controlled actuator 440 also provides the position feedback signal 404, which is fed back to the slow zone logic module 420 and the closed loop controller 430.

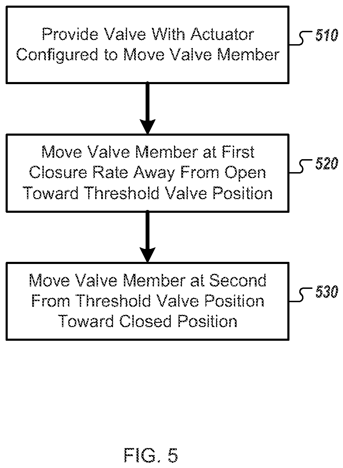

FIG. 5 is a flow chart that shows an example of a process 500 for operating a valve with variable stroke rate. In some implementations, the control system 400 may be used by the controller 110 of the example turbine system 100, the controller 240 of the example valve assembly 200, or by the example control system 400 of FIG. 4. In some implementations, the process 500 may be used to create the behaviors illustrated by the example chart 300.

The process 500 starts at step 510, in which a valve is provided. The valve includes an actuator configured to move a valve member between an open valve position and a closed valve position. For example, the example valve assembly 200 includes the valve 210 and the actuator assembly 220. The actuator assembly 220 is configured to move the moveable member 254 to open, close, and otherwise modify the flow of fluid through the valve 210.

At 520 the actuator moves the valve member away from the open valve position and at a first valve closure rate toward a threshold valve position away from the closed valve position. For example, the example slow zone demand 330 can be demanded from the point 331 or 332 to the point 333, to close the moveable member 254 from an open position to approximately 10% open.

At 530, the actuator moves the valve member at a second valve closure rate from the threshold valve position toward the closed valve position. For example, the example slow zone demand 330 can be demanded from the point 333, which is near the 10% open position, to the point 334 which is near the full closed, 0% open position.

In accordance with the invention, the second valve closure rate is less than the first valve closure rate. In the slow zone 360, the demand rate is lower than the demand rate of the slow zone 350, or the demand rate illustrated from the point 331 to the point 332.

In some implementations, the closed valve position can be defined by the valve member being in contact with a valve seat. For example, the moveable member 254 can be moved until it contacts a hard stop at the fully closed configuration.

In some implementations the first valve closure rate can be equal to or greater than a threshold closure rate able to cause damage to at least one of the valve member or the valve seat when the valve member contacts the valve seat at the threshold closure rate. For example, the rate of the slow zone demand 330 in the slow zone 350 is approximately 20% per $1/10^{th}$ of a second, whereas one or more components of the example valve assembly 200 may be known to be capable of tolerating hard stop impacts caused by a 15% per $1/10^{th}$ second closure rate.

In some implementations, the second valve closure rate can be less than a threshold closure rate able to cause damage to at least one of the valve member or the valve seat. For example, the rate of the slow zone demand 330 in the slow zone 360 is approximately 10% per 1/10th of a second, whereas one or more components of the example valve assembly 200 may be known to be capable of tolerating hard stop impacts caused by a 15% per 1/10th second closure rate.

In accordance with the invention, the closed position is a fully closed position. For example, the closed position can be the 0% position of the example chart 300. In accordance with the invention, the threshold valve position is based on a variability in the location of the fully closed valve position relative to the valve member. In accordance with the invention, the variability is determined based on at least one of (1) a collection of manufacturing tolerances for the valve, (2) a collection of coefficients of thermal expansion for the valve, or (3) a collection of wear characteristics for the valve.

In some embodiments, the valve may include two or more valves, and each valve may have its own open position and closed position. For example, the controller 240 of the example valve assembly 200 may be configured to control the movement of multiple valves between each valve's respective open position and closed position at fast and slow closure rates. In some embodiments, the multiple valves may be mechanically separate (e.g., independently actuated). For example, the controller 240 may be configured to control two valves independently (e.g., the valves may have different open positions, closed positions, fast closure rates, slow closure rates, and/or predetermined positions between open and closed). In some embodiments, the multiple valves may be mechanically linked (e.g., the controller 240 controls the fast and slow rates of two or more valves through a single mechanical linkage).

Although a few implementations have been described in detail above, other modifications that lie within the scope defined by the claims are possible.

**Claims**

1. A method for controlling a valve (112, 210) for a turbine system (100), the method comprising:

   providing a valve (112, 210) comprising an electric motor actuator (113, 117) configured to move a valve member (212) between an open valve position and a closed valve position;
   moving, by the electric motor actuator (113, 117) and at a first valve closure rate, the valve member away from the open valve position and toward a threshold valve position that is away from the closed valve position to reduce or prevent hard collisions between the valve member and a valve seat under expected operational conditions;
   measuring, by a position sensor (256), the valve member position;
   moving, by the electric motor actuator (113, 117) and at a second valve closure rate, the valve member from the threshold valve position toward the closed valve position, wherein the closed position is a fully closed position, and wherein the second valve closure rate is less than the first valve closure rate, and
   wherein the threshold valve position is based on a variability in the location of the fully closed valve position relative to the valve member, wherein the variability is determined based on at least one of 1) a collection of manufacturing tolerances for the valve, 2) a collection of coefficients of thermal expansion for the valve, or 3) a collection of wear characteristics for the valve.

**2.** The method of claim 1, wherein the closed valve position is defined by the valve member being in contact with the valve seat, optionally wherein the first valve closure rate is equal to or greater than a threshold closure rate able to cause damage, wherein the damage is caused by impact, which prevents sealing surfaces of the valve from sealing, to at least one of the valve member or the valve seat when the valve member contacts the valve seat at the threshold closure rate.

**3.** The method of claim 2, wherein the second valve closure rate is less than a threshold closure rate able to cause damage, wherein the damage is caused by impact, which prevents sealing surfaces of the valve from sealing, to at least one of the valve member or the valve seat.

**4.** The method of claim 1, wherein the valve member is a plurality of valve members, and the electric motor actuator (113, 117) is configured to move the plurality of valve members between an open valve position for each valve member and a closed valve position for each valve member.

**5.** A valve apparatus for a turbine system (100), the valve apparatus comprising:

a valve member (212);
an electric motor actuator (113, 117) configured to move the valve member between an open valve position and a closed valve position, wherein the closed valve position is a fully closed position, and a position sensor (256) configured to sense the position of the valve member; and
a controller (240) configured to move the valve member, at a first valve closure rate, away from the open valve position and toward a threshold valve position away from the closed valve position, receive the position of the valve member and moving, at a second valve closure rate, the valve member from the threshold valve position toward closed valve position, and wherein the second valve closure rate is less than the first valve closure rate, and
wherein the controller is configured to receive rotational position and/or speed signals from the position sensor, wherein the threshold valve position is based on a variability in the location of the fully closed valve position relative to the valve member, wherein the variability is determined based on at least one of 1) a collection of manufacturing tolerances for the valve, 2) a collection of coefficients of thermal expansion for the valve, or 3) a collection of wear characteristics for the valve.

**6.** The apparatus of claim 5, wherein the closed valve position is defined by the valve member being in contact with a valve seat.

**7.** The apparatus of claim 6, wherein the first valve closure rate is equal to or greater than a threshold closure rate able to cause damage, wherein the damage is caused by impact, which prevents sealing surfaces of the valve from sealing, to at least one of the valve member or the valve seat when the valve member contacts the valve seat at the threshold closure rate.

**8.** The apparatus of any one of claims 5 or 7, wherein the second valve closure rate is less than a threshold closure rate able to cause damage, wherein the damage is caused by impact, which prevents sealing surfaces of the valve from sealing to at least one of the valve member or the valve seat.

**9.** The apparatus of any one of claims 5 to 8, wherein the valve member is a plurality of valve members, and the electric motor actuator is configured to move the plurality of valve members between an open valve position for each valve member and a closed valve position for each valve member

**Patentansprüche**

**1.** Verfahren zum Regeln eines Ventils (112, 210) für ein Turbinensystem (100), das Verfahren umfasst:

Bereitstellen eines Ventils (112, 210), umfassend einen Elektromotoraktuator (113, 117), ausgelegt zum Bewegen eines Ventilelements (212) zwischen einer offenen Ventilposition und einer geschlossenen Ventilposition;
Bewegen, durch den Elektromotoraktuator (113, 117) und bei einer ersten Ventilschließrate, des Ventilelements weg von der offenen Ventilposition und hin zu einer Schwellenventilposition, die entfernt von der geschlossenen Ventilposition ist, um unter erwarteten Betriebsbedingungen harte Kollisionen zwischen dem Ventilelement und einem Ventilsitz zu verringern oder zu verhindern;

Messen, durch einen Positionssensor (256), der Ventilelementposition;

Bewegen, durch den Elektromotoraktuator (113, 117) und bei einer zweiten Ventilschließrate, des Ventilelements von der Schwellenventilposition hin zur geschlossenen Ventilposition, wobei die geschlossene Position eine vollständig geschlossene Position ist und wobei die zweite Ventilschließrate kleiner als die erste Ventilschließrate ist, und

wobei die Schwellenventilposition auf einer Variabilität im Ort der vollständig geschlossenen Ventilposition bezüglich des Ventilelements basiert, wobei die Variabilität bestimmt wird basierend zumindest auf einem aus: 1) einer Sammlung von Fertigungstoleranzen für das Ventil, 2) einer Sammlung von Wärmeausdehnungskoeffizienten für das Ventil oder 3) einer Sammlung von Verschleißcharakteristiken für das Ventil.

2. Verfahren nach Anspruch 1, wobei die geschlossene Ventilposition dadurch definiert wird, dass das Ventilelement in Kontakt mit dem Ventilsitz ist, wobei optional die erste Ventilschließrate gleich oder größer als eine Schwellenschließrate ist, die in der Lage ist, Schaden zu verursachen, wobei der Schaden durch Stoß verursacht wird, der verhindert, dass die Dichtungsoberflächen des Ventils gegenüber zumindest einem aus dem Ventilelement oder dem Ventilsitz abdichten, wenn das Ventilelement mit der Schwellenschließrate mit dem Ventilsitz in Kontakt kommt.

3. Verfahren nach Anspruch 2, wobei die zweite Ventilschließrate kleiner als eine Schwellenschließrate ist, die in der Lage ist, Schaden zu verursachen, wobei der Schaden durch Stoß verursacht wird, der verhindert, dass die Dichtungsoberflächen des Ventils gegenüber zumindest einem aus dem Ventilelement oder dem Ventilsitz abdichten.

4. Verfahren nach Anspruch 1, wobei das Ventilelement mehrere Ventilelemente ist und der Elektromotoraktuator (113, 117) dazu ausgelegt ist, die mehreren Ventilelemente zwischen einer offenen Ventilposition für jedes Ventilelement und einer geschlossenen Ventilposition für jedes Ventilelement zu bewegen.

5. Ventileinrichtung für ein Turbinensystem (100), die Ventileinrichtung umfasst:

ein Ventilelement (212);

einen Elektromotoraktuator (113, 117), ausgelegt zum Bewegen des Ventilelements zwischen einer offenen Ventilposition und einer geschlossenen Ventilposition, wobei die geschlossene Ventilposition eine vollständig geschlossene Position ist, und einen Positionssensor (256), ausgelegt zum Erfassen der Position des Ventilelements; und

eine Steuerung (240), ausgelegt zum Bewegen des Ventilelements, bei einer ersten Ventilschließrate, weg von der offenen Ventilposition und hin zu einer Schwellenventilposition entfernt von der geschlossenen Ventilposition, Empfangen der Position des Ventilelements und Bewegen, bei einer zweiten Ventilschließrate, des Ventilelements von der Schwellenventilposition hin zu der geschlossenen Ventilposition, wobei die zweite Ventilschließrate kleiner als die erste Ventilschließrate ist, und

wobei die Steuerung ausgelegt ist zum Empfangen von Drehpositions- und/oder Geschwindigkeitssignalen, wobei die Schwellenventilposition auf einer Variabilität im Ort der vollständig geschlossenen Ventilposition bezüglich des Ventilelements basiert, und wobei die Variabilität bestimmt wird basierend zumindest auf einem aus: 1) einer Sammlung von Fertigungstoleranzen für das Ventil, 2) einer Sammlung von Wärmeausdehnungskoeffizienten für das Ventil oder 3) einer Sammlung von Verschleißcharakteristiken für das Ventil.

6. Einrichtung nach Anspruch 5, wobei die geschlossene Ventilposition dadurch definiert ist, dass das Ventilelement in Kontakt mit einem Ventilsitz ist.

7. Einrichtung nach Anspruch 6, wobei die erste Ventilschließrate gleich oder größer als eine Schwellenschließrate ist, die in der Lage ist, Schaden zu verursachen, wobei der Schaden durch Stoß verursacht wird, der verhindert, dass die Dichtungsoberflächen des Ventils gegenüber zumindest einem aus dem Ventilelement oder dem Ventilsitz abdichten, wenn das Ventilelement mit der Schwellenschließrate mit dem Ventilsitz in Kontakt kommt.

8. Einrichtung nach einem der Ansprüche 5 oder 7, wobei die zweite Ventilschließrate kleiner als eine Schwellenschließrate ist, die in der Lage ist, Schaden zu verursachen, wobei der Schaden durch Stoß verursacht wird, der verhindert, dass die Dichtungsoberflächen des Ventils gegenüber zumindest einem aus dem Ventilelement oder dem Ventilsitz abdichten.

9. Einrichtung nach einem der Ansprüche 5 bis 8, wobei das Ventilelement mehrere Ventilelemente ist und der Elektromotoraktuator dazu ausgelegt ist, die mehreren Ventilelemente zwischen einer offenen Ventilposition für jedes Ventilelement und einer geschlossenen Ventilposition für jedes Ventilelement zu bewegen.

**Revendications**

1. Méthode de contrôle d'une soupape (112, 210) pour un système de turbine (100), la méthode comprenant :

   la fourniture d'une soupape (112, 210) comprenant un actionneur de moteur électrique (113, 117) configuré pour déplacer un élément de soupape (212) entre une position de soupape ouverte et une position de soupape fermée ;
   le déplacement, par l'actionneur de moteur électrique (113, 117) et à un premier taux de fermeture de soupape, de l'élément de soupape à l'écart de la position de soupape ouverte et vers une position de soupape de seuil qui est à l'écart de la position de soupape fermée pour réduire ou empêcher des collisions dures entre l'élément de soupape et un siège de soupape dans des conditions de fonctionnement attendues ;
   la mesure, par un détecteur de position (256), de la position de l'élément de soupape ;
   le déplacement, par l'actionneur de moteur électrique (113, 117) et à un deuxième taux de fermeture de soupape, de l'élément de soupape de la position de soupape de seuil vers la position de soupape fermée, la position fermée étant une position entièrement fermée, et le deuxième taux de fermeture de soupape étant inférieur au premier taux de fermeture de soupape, et
   la position de soupape de seuil étant basée sur une variabilité de l'emplacement de la position de soupape entièrement fermée relativement à l'élément de soupape, la variabilité étant déterminée sur la base d'au moins une collection parmi 1) une collection de tolérances de fabrication pour la soupape, 2) une collection de coefficients de dilatation thermique pour la soupape, ou 3) une collection de caractéristiques d'usure pour la soupape.

2. Méthode selon la revendication 1, dans laquelle la position de soupape fermée est définie par le fait que l'élément de soupape est en contact avec le siège de soupape, dans laquelle facultativement le premier taux de fermeture de soupape est égal ou supérieur à un taux de fermeture de seuil capable de causer des dommages, les dommages étant causés par un impact, ce qui empêche les surfaces de scellement de la soupape de se sceller à au moins un élément parmi l'élément de soupape ou le siège de soupape lorsque l'élément de soupape entre en contact avec le siège de soupape à la vitesse de fermeture de seuil.

3. Méthode selon la revendication 2, dans laquelle le deuxième taux de fermeture de soupape est inférieur à un taux de fermeture de seuil capable de causer des dommages, les dommages étant causés par un impact, ce qui empêche des surfaces de scellement de la soupape de se sceller contre au moins un élément parmi l'élément de soupape ou le siège de soupape.

4. Méthode selon la revendication 1, dans laquelle l'élément de soupape est une pluralité d'éléments de soupape, et l'actionneur de moteur électrique (113, 117) est configuré pour déplacer la pluralité d'éléments de soupape entre une position de soupape ouverte pour chaque élément de soupape et une position de soupape fermée pour chaque élément de soupape.

5. Appareil de soupape pour un système de turbine (100), l'appareil de soupape comprenant :

   un élément de soupape (212) ;
   un actionneur de moteur électrique (113, 117) configuré pour déplacer l'élément de soupape entre une position de soupape ouverte et une position de soupape fermée, la position de soupape fermée étant une position entièrement fermée, et un détecteur de position (256) configuré pour détecter la position de l'élément de soupape ; et
   un dispositif de contrôle (240) configuré pour déplacer l'élément de soupape, à un premier taux de fermeture de soupape, à l'écart de la position de soupape ouverte et vers une position de soupape de seuil à l'écart de la position de soupape fermée, recevoir la position de l'élément de soupape et déplacer, à un deuxième taux de fermeture de soupape, l'élément de soupape de la position de soupape de seuil vers la position de soupape fermée, le deuxième taux de fermeture de soupape étant inférieur au premier taux de fermeture de soupape, et le dispositif de contrôle étant configuré pour recevoir des signaux de position et/ou de vitesse de rotation provenant du détecteur de position, la position de soupape de seuil étant basée sur une variabilité de l'emplacement de la position de soupape entièrement fermée relativement à l'élément de soupape, et la variabilité étant déterminée sur la base d'au moins une collection parmi 1) une collection de tolérances de fabrication pour la soupape, 2) une collection de coefficients de dilatation thermique pour la soupape, ou 3) une collection de caractéristiques d'usure pour la soupape.

6. Appareil selon la revendication 5, dans lequel la position de soupape fermée est définie par le fait que l'élément de soupape est en contact avec un siège de soupape.

7. Appareil selon la revendication 6, dans lequel le premier taux de fermeture de soupape est égal ou supérieur à un taux de fermeture de seuil capable de causer des dommages, les dommages étant causés par un impact, ce qui empêche des surfaces de scellement de la soupape de se sceller contre au moins un élément parmi l'élément de soupape ou le siège de soupape lorsque l'élément de soupape entre en contact avec le siège de soupape à la vitesse de fermeture de seuil.

8. Appareil selon l'une quelconque des revendications 5 ou 7, dans lequel le deuxième taux de fermeture de soupape est inférieur à un taux de fermeture de seuil capable de causer des dommages, les dommages étant causés par un impact, ce qui empêche des surfaces de scellement de la soupape de se sceller contre au moins un élément parmi l'élément de soupape ou le siège de soupape.

9. Appareil selon l'une quelconque des revendications 5 à 8, dans lequel l'élément de soupape est une pluralité d'éléments de soupape, et l'actionneur de moteur électrique est configuré pour déplacer la pluralité d'éléments de soupape entre une position de soupape ouverte pour chaque élément de soupape et une position de soupape fermée pour chaque élément de soupape.

FIG. 1

FIG. 2A

FIG. 2B

FIG. 3

FIG. 4

```
┌─────────────────────────────────┐
│   Provide Valve With Actuator    │──⌐ 510
│ Configured to Move Valve Member  │
└─────────────────────────────────┘
                │
                ▼
┌─────────────────────────────────┐
│    Move Valve Member at First    │──⌐ 520
│   Closure Rate Away From Open    │
│  Toward Threshold Valve Position │
└─────────────────────────────────┘
                │
                ▼
┌─────────────────────────────────┐
│    Move Valve Member at Second   │──⌐ 530
│  From Threshold Valve Position   │
│      Toward Closed Position      │
└─────────────────────────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9910629 A

- US 20050132986 A1